# EUROPEAN PATENT APPLICATION

(11) **EP 4 083 102 A1**
(43) Date of publication of application: **02.11.2022**
(21) Application number: 21171725.1
(22) Date of filing: 30.04.2021
(51) Int. Cl.: C08G 59/22, C08G 59/24, C08G 59/54, C08G 59/62, C08K 7/20, C08G 59/46, C08L 63/00, C09D 163/00

(54) **ULTRA-LIGHT EPOXY COMPOSITION**

(71) Applicant: 3M Innovative Properties Company, Saint Paul, MN 55133-3427 (US)
(72) Inventor: Elgimiabi, Sohaib, 40629 Düsseldorf (DE)
(74) Representative: Hettstedt, Stephan

(57) **Abstract**

In one aspect of the present disclosure, there is provided a low-density curable composition precursor, comprising
(a) a first part (A) comprising:
(i) at least one polymeric diamine;

(b)a second part (B) comprising:
(i) at least one epoxy resin;
(ii) at least one reactive diluent;
(iii) at least one amide selected from fatty acid amides and polyamides;

wherein part (A) and/or part (B) comprise a low density filler material having a density of less than 0.3 g/cc; and wherein the curable composition obtained by combining part (A) and part (B) has a cured density according to DIN 53479A of less than 0.55 g/cc.

## Description

### Technical Field

The disclosure relates to low density curable two-part epoxy compositions. Further, the present disclosure further relates to a method for smoothening surfaces. Moreover, the present disclosure further relates to a use of the low density curable compositions in manufacture and maintenance operations, in particular in aerospace industries.

### Background

Abradable coatings and fillers find widespread use in manufacturing and maintenance processes. That is, a composition is spread over a surface which may contain defects, cracks or gaps, or used to fill a gap in a surface. Then, after the composition has cured, the coating may be sanded or polished so as to obtain an even or smoothed surface. For example, this may be useful in filling gaps between panels, repairing cracks in surfaces, or generally smoothing surfaces.

While abradable coatings and processes as described are known in the art, progresses in certain industries have considerably raised the bar for already demanding requirements for abradable coatings. One of the most demanding environment for adrabable coating compositions is the aerospace industry. Here, the coating must exhibit a combination of properties such as resistance to higher temperatures and humidity over prolonged periods of time, low weight and good abradability. Moreover, even fire retardant properties may be required for most applications in aerospace, but also other industrial applications such as observed in the automotive or transportation manufacture industries.

Further compositions are used in the aerospace industry in conjunction with composite materials and parts made therefrom. In particular, this applies to honeycomb sandwich panels. The honeycomb voids are oftentimes filled with so-called void fillers for stability and insulation reasons. Also, similar materials are used for filling the edges of honeycomb sandwich structures. While abradability is not always a mandatory requirement, it still represents desirable property for edge or gap fillers.

Also, there is a general desire for automated applications of compositions in industry. Accordingly, since coating compositions, edge-, gap-, and voidfiller compositions are most often pasteous compositions, it is at least desirable that these compositions are extrudable or pumpable in order to meet the requirements for industrial applicability.

For these reasons, there exists desire from industry for new materials and processes for smoothening surfaces and/or filling gaps, which exhibit a combination of properties suited for demanding environments and applications.

### Summary

The present disclosure provides a low-density curable composition precursor, comprising
(a) a first part (A) comprising:
   (i) at least one polymeric diamine;
(b)a second part (B) comprising:
   (i) at least one epoxy resin;
   (ii) at least one reactive diluent;
   (iii) at least one amide selected from fatty acid amides and polyamides;
wherein part (A) and/or part (B) comprise a low density filler material having a density of less than 0.3 g/cc; and wherein the curable composition obtained by combining part (A) and part (B) has a cured density according to DIN 53479A of less than 0.55 g/cc.

The present disclosure further provides a method of smoothening surfaces comprising the following steps:
(a) Providing a low-density curable composition precursor as described herein,
(b) Combining parts (A) and (B) of the curable coating composition precursor so as to form a curable composition;
(c) Applying the curable composition to at least part of the surface a substrate;
(d) Allowing the curable coating composition to cure so as to obtain a cured coating;
(e) Sanding the surface comprising the cured coating, thereby obtaining a smoothed surface.

Furthermore, the present disclosure relates to the use of the low-density curable coating composition precursor according to the present disclosure for manufacture and maintenance operations in aerospace and automotive industries.

### Detailed Description

Before any embodiments of this disclosure are explained in detail, it is to be understood that the disclosure is not limited in its application to the details of construction and the arrangement of components set forth in the following description. The invention is capable of other embodiments and of being practiced or of being carried out in various ways. As used herein, the term "a", "an", and "the" are used interchangeably and mean one or more; and "and/or" is used to indicate one or both stated cases may occur, for example A and/or B includes, (A and B) and (A or B). Also herein, recitation of ranges by endpoints includes all numbers subsumed within that range (e.g., 1 to 10 includes 1.4, 1.9, 2.33, 5.75, 9.98, etc.). Also herein, recitation of "at least one" includes all numbers of one and greater (e.g., at least 2, at least 4, at least 6, at least 8, at least 10, at least 25, at least 50, at least 100, etc.). Also, it is to be understood that the phraseology and terminology used herein is for the purpose of description and should not be regarded as limiting. Contrary to the use of "consisting", which is meant to be limiting, the use of "including," "containing", "comprising," or "having" and variations thereof is meant to be not limiting and to encompass the items listed thereafter as well as additional items.

Amounts of ingredients of a composition may be indicated by % by weight (or "% wt". or "wt.-%") unless specified otherwise. The amounts of all ingredients gives 100 % wt unless specified otherwise. If the amounts of ingredients is identified by % mole the amount of all ingredients gives 100% mole unless specified otherwise.

In the context of the present disclosure, the terms "room temperature" and "ambient temperature" are used interchangeably and refer to a temperature of 23 °C (± 2 °C) at ambient pressure condition of about 101 kPa.

Unless explicitly stated otherwise, all embodiments and optional features of the present disclosure can be combined freely.

The first aspect of the present disclosure is a low-density curable composition precursor, comprising
(a) a first part (A) comprising:
   (i) at least one polymeric diamine;
(b)a second part (B) comprising:
   (i) at least one epoxy resin;
   (ii) at least one reactive diluent;
   (iii) at least one amide selected from fatty acid amides and polyamides;
wherein part (A) and/or part (B) comprise a low density filler material having a density of less than 0.3 g/cc; and wherein the curable composition obtained by combining part (A) and part (B) has a cured density according to DIN 53479A of less than 0.55 g/cc.

Curable low density composition precursors as the one according to the present disclosure are also known as 2-component compositions or 2k-compositions. It is understood that the first part (A) is physically separated from the second part (B) of the curable coating composition precursor. The first part (A) and second part (B) are mixed before the intended use according to the user's needs so as to obtain a curable composition. The present disclosure also covers a low density curable composition, obtained from the low density curable composition precursor and a cured composition obtained from curing the low density curable composition. The use of these 2k-compositions offers several advantages such as a longer shelf-life, the possibility to form a curable composition according to the user's needs, and a readily curable composition which itself offers further handling advantages for the user, in particular in the technical field of industrial manufacture of parts of aircrafts or other vehicles for transportation of goods and persons.

Due to the combination of ingredients of the low density curable composition precursor according to the present invention, the composition and its precursor exhibit combination of desirable properties such as good handling properties, low density which is particularly advantageous for light weight assemblies, resistance towards higher temperatures and humidity even for prolonged period of time, easy abradability, good mechanical strength while at the same time exhibiting excellent sandability. That is, the low density curable composition precursor may be stored for a period of time, handled with ease in maintenance or manufacture facilities, may be applied easily, may be easily sandable to a favourable outer appearance, and my provide protection against weathering influences even at higher temperatures. Furthermore, the combination of ingredients of the curable composition precursor according to the present disclosure gives rise to the advantage that the curable compositions may be cured at ambient temperatures, i.e. without the need of additional heating. This is particularly advantageous for applications where large amounts of the low density curable compositions as described herein are applied. Furthermore, part (A) and/or part (B) of the low density curable composition precursors as described herein are extrudable. Preferably, both parts are extrudable. This has the common meaning in the art, i.e. that the compositions may be extruded by common means. For example, the compositions of part (A) and/or part (B) may be stored in commonly used cartridges and extruded manually or by automated means. This has the advantage that part (A) and (B) may be stored independently in commonly used cartridges, and extruded prior to application through a mixing chamber, where the parts are mixed and a low density curable composition is extruded. This also means that part (A) and/or part (B), preferably part (A) and part (B), are pumpable. Being pumpable means that the part (A) and part (B) may be pumped by corresponding equipment. This has the advantage that large amounts of the compositions according to the present disclosure may be applied, which represents a desirable handling advantage via manually extruded applications by hand-held devices which allow only for the application of smaller amounts. At least one or even the combination of properties makes the low density curable composition precursor according to the present disclosure excellently suited for manufacture or maintenance operations in aerospace and automotive industries.

In general, part (B) of the curable composition precursors as described herein comprise at least one epoxy resins, while part (A) comprise at least one epoxy curing agent which is able to cure the composition obtained upon combining part (A) and part (B). Epoxy curing agents suitable for use in the present disclosure are compounds which are capable of cross-linking (curing) the epoxy resin. Suitable curing agents according to the present invention may be primary or secondary amines. Part (A) of the curable coating composition precursor as described herein comprises at least one polymeric diamine.

Without wishing to be bound by theory, it is believed that the polymeric diamine curing agent provides good resistance towards higher temperatures and humidity of the cured coating without sacrificing the ability to the curable compositions as described herein being cured at ambient temperature. The use of the the polymeric diamine has the advantage of a cured coating or filler which may be well abraded by common means in the art. Use of other, in particular short chain amines, would lead to high cross-linked products which are very difficult to abrade. In other words, the coating obtained from the compositions according to the present disclosure may exhibit good abradability.. Preferably, the polymeric diamine as used herein is selected from high molecular weight polymeric diamines. This includes polyamides, such as polyaminopolyamides and polyamides which are the reaction product of diaminopropylether and a polycarboxylic acid. Suitable amides derived from the reaction product of the diaminopolyether and polycarboxylic acid are available commercially from Air Products and Chemical Company under the Ancamide trademark designation. A preferred amide is Ancamide 910 a condensation product of a dimer acid and diethylene glycol diaminopropyl ether. Commercially available examples are RZ 810 manufactured by 3M or Ancamid 910 manufactured by Air Products. Preferably, the at least one polymeric diamine is contained in part (A) in an amount in the range of from 30 to 70 wt.-%, preferably from 35 to 65 wt.-%, more preferably from 40 to 60 wt.-%.

Part (A) of the low density curable composition precursor according to the present disclosure may further comprise at least one cure accelerator. This has the advantage that the low density curable composition hardens quicker at lower temperatures, i.e. at temperatures at or around room temperature. Curing at these temperatures is advantageous in aerospace since large parts or panels may need to be manufactured, including the application of coating compounds, core or edge filler materials, and curing at elevated temperatures may not be feasible. The at least one cure accelerator is preferably selected from Lewis-base accelerator, more preferably selected from tertiary amines and metal nitrates, even more preferably selected from aromatic tertiary amines. The use of aromatic tertiary amines is preferred due to the advantageous effect on the viscosity and the extrudability or pumpability of part (A) of the precursor and the curable compositions obtained therefrom.

Preferably, the metal in the metal salt catalyst is selected from the group consisting of alkali, earth alkali, rare earth metals, aluminium, preferably from alkali and earth alkali, more preferably from alkaline earth, even more preferably from calcium, caesium, strontium, and magnesium. The anion is preferably selected from nitrate, nitrite and organic acid anion, preferably sulfates and triflates, more preferably triflates, of which nitrates and triflates are particularly preferred. Nitrates are strongly preferred. In this regard, metal salt catalyst selected from the group consisting of calcium nitrate, calcium triflate, aluminium nitrate, magnesium nitrate, lithium nitrate, potassium nitrate, sodium nitrate, and any combinations thereof is preferred. The use of calcium nitrate, magnesium nitrate, calcium triflate, and any combinations thereof is preferred, with particular preference on calcium nitrate.

The aromatic tertiary amine of the at least one cure accelerator as described herein is preferably selected form the group consisting of imidazoles, imidazole-salts, imidazolines or aromatic tertiary amines including those having the structure of formula (1): 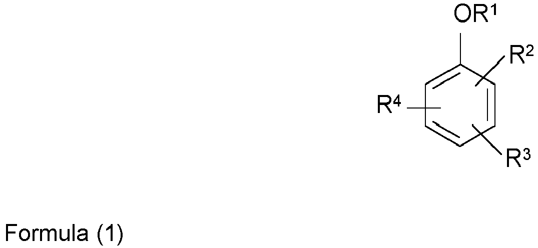 wherein
R¹ is H or alkyl, such as, e.g., methyl or ethyl, preferably methyl;
R² is CH₂NR⁵R⁶;
R³ and R⁴ may be, independently from each other, present or absent and when present R³ and R⁴ are CH₂NR⁵R⁶;
R⁵ and R⁶ are, independent from each other, alkyl, preferably CH₃ or CH₂CH₃.

Exemplary second epoxy curatives for use herein according to formula (1) include tris-2,4,6-(dimethylaminomethyl)phenol commercially available under the trade designation ANCAMINE K54 from Air Products and Chemicals Inc. It is preferred that the at least one cure accelerator is contained in part (A) in an amount in the range of from 0.1 to 20 wt.-%, preferably from 1 to 15 wt.-%, and more preferably from 2.5 to 12.5 wt.-%, based on the total weight of part (A).

In a lot of industrial applications for coating and filler materials, a certain fire resistance is desirable or even required. This is particularly true for the aerospace industry. Materials must not burn easily, and are subject to strict regulations regarding toxic fume and smoke emissions. Therefore, it is preferred that the curable composition precursor comprises at least one fire retardant compound in part (A) and/or part (B). In this regard, best results may be obtained with phosphorous-based compounds. Thus, it is preferred that the at least one fire retardant compound comprises at least one phosphorous based compound, preferably selected from organic and inorganic phosphorous based compounds. Also, halogenated organic compounds, preferably brominated organic compounds, may be advantageously used. The at least one fire retardant compound may also comprise at least one phosphorous based compound and at least one brominated organic compound.

Preferably, the at least one fire retardant compound comprises at least one phosphorous based compound and is selected from organophosphates, preferably triphenyl phosphate, resorcinol bis(diphenylphosphate, bisphenol A diphenylphosphate, tricresyl phosphate, organophosphonates, preferably dimethyl(methylphosphonate), and phosphinates, preferably metal phosphinates, preferably metal selected from aluminium, iron, kalium, calcium, sodium, preferably phosphinates selected from diethyl phosphinate, dimethylphosphinate, dipropylphosphinate, dibutylphosphinate, diphenylphosphinate, preferably aluminium diethylphosphinate, polyphosphate compounds, preferably ammonium polyphosphate, preferably coated ammonium polyphosphate. It is preferred that the at least one fire retardant compound comprises 1,2-Bis-(tetrabromophthalimido)ethane and at least one ammonium polyphosphate.

Preferably, the at least one fire retardant compound is contained in part (A) in an amount in the range of from 0.5 to 25 wt.-%, preferably from 1 to 20 wt.%, more preferably from 5 to 15 wt.-%, based on the total weight of part (A). Similarly, it is preferred that the at least one fire retardant compound is contained in part (B) in an amount in the range of from 1 to 40 wt.-%, preferably from 5 to 35 wt.%, more preferably from 10 to 30 wt.-%, based on the total weight of part (B).

Part (B) of the low density curable composition precursor according to the present disclosure comprises a combination of at least one epoxy resin, at least one reactive diluent and at least one amide selected from fatty acid amides and polyamides. Suitable epoxy resins for use herein will be easily identified by those skilled in the art, in the light of the present description.

The epoxy resin for use herein is not particularly limited. Epoxy resins are polymers having one or more epoxy-functionality. Typically but not exclusively, the polymers contain repeating units derived from monomers having an epoxy-functionality but epoxy resins can also include, for example, silicone-based polymers that contain epoxy groups or organic polymer particles coated with or modified with epoxy groups or particles coated with, dispersed in, or modified with epoxy-groups-containing polymers. The epoxy-functionalities allow the resin to undertake cross-linking reactions. The epoxy resins may have an average epoxy-functionality of at least 1, greater than one, or of at least 2.

Any epoxy resins well known to those skilled in the art may be used in the context of the present disclosure. Epoxy resins may be aromatic, aliphatic, cycloaliphatic or mixtures thereof. In a typical aspect, the epoxy resins for use herein are aromatic. Preferably, the epoxy resins contain moieties of the glycidyl or polyglycidyl ether type. Such moieties may be obtained, for example, by the reaction of a hydroxyl functionality (for example but not limited to dihydric or polyhydric phenols or aliphatic alcohols including polyols) with an epichlorohydrin-functionality. As referred to herein, dihydric phenols are phenols containing at least two hydroxy groups bonded to the aromatic ring (also referred to as "aromatic" hydroxy groups) of a phenol -or in case of polyphenols at least two hydroxy groups are bonded to an aromatic ring. This means the hydroxyl groups can be bonded to the same ring of the polyphenol or to different rings each of the polyphenol. Therefore, the term "dihydric phenols" is not limited to phenols or polyphenols containing two "aromatic" hydroxy groups but also encompasses polyhydric phenols, i.e. compounds having more than two "aromatic" hydroxy groups.

Examples of useful dihydric phenols include resorcinol, catechol, hydroquinone, and polyphenols including p,p'-dihydroxydibenzyl, p,p'-dihydroxyphenylsulfone, p,p'-dihydroxybenzophenone, 2,2'-dihydroxyphenyl sulfone, p,p'-dihydroxybenzophenone, 2,2-dihydroxy-1,1-dinaphthylmethane, and the 2,2', 2,3', 2,4', 3,3', 3,4', and 4,4' isomers of dihydroxydiphenylmethane, dihydroxydiphenyldimethylmethane, dihydroxydiphenylethylme thylmethane, dihydroxydiphenylmethylpropylmethane, dihydroxydiphenylethylphenylmethane,dihydroxydiphenylpropylenphenylmethane, dihydroxydiphenylbutylphenylmethane, dihydroxydiphenyltolylethane, dihydroxydiphenyltolylmethylmethane, dihydroxydiphenyldicyclohexylmethane, and dihydroxydiphenylcyclohexane.

Preferred epoxy resins include epoxy resins containing or consisting of glycidyl ethers or polyglycidyl ethers of dihydric or polyhydric phenols, such as for example, but not limited to bisphenol A, bisphenol F and combinations thereof. They contain one or more repeating units derived from bisphenol A and/or F. Such ethers, or such repeating units are obtainable, for example, by a polymerization of glycidyl ethers of bisphenol A and/or F with epichlorohydrin. Epoxy resins of the type of diglycidyl ether of bisphenol A can be represented by the formula wherein n denotes the repeating unit (in case of n= 0 the formula below represents the diglycidyl ether of bisphenol A):

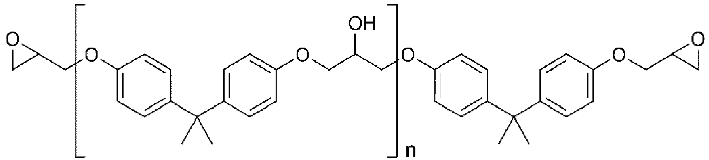

Typically, the epoxy resins are blends of several resins. Accordingly, n in the formula above may represent an average value of the blend, and may not be an integer but may include values like, for example and not limited thereto, 0.1 to 2.5. Preferably, the at least one epoxy resin comprises a bisphenol A based epoxy resin and/or a bisphenol F based epoxy resin, preferably a blend comprising at least one bisphenol A based epoxy resin and at least one bisphenol F based epoxy resin.

Instead of, or in addition to, using the aromatic epoxy resins described above also their fully or partially hydrogenated derivatives (i.e. the corresponding cycloaliphatic compounds) may be used. Instead of, or in addition to using aromatic epoxy resins also aliphatic, for example acyclic, linear or branched, epoxy resins may be used.

Typically, the epoxy resin is liquid. The epoxy resins may include solid epoxy resins, used in dissolved form, or dispersed, for example in another liquid resin. Preferably, the epoxy resin is liquid at ambient conditions (23 °C, 1 bar). The epoxy resins may contain halogens, preferably bromine atoms to make them less flammable.

Examples of suitable and commercially available epoxy resins include diglycidylether of bisphenol A (available under the trade designation EPON 828, EPON 830, EPON 1001 or EPIKOTE 828 from Hexion Speciality Chemicals GmbH, Rosbach, Germany, or under the trade designation D.E.R-331 or D.E.R-332 from Dow Chemical Co,); diglycidyl ether of bisphenol F (e.g. EPICLON 830 available from Dainippon Ink and Chemicals, Inc. or D.E.R.-354 from Dow Chemical Co, Schwalbach/Ts., Germany); diglycidyl ethers of a blend of bisphenol A and bisphenol F (e.g. EPIKOTE 232 available from Momentive Speciality Chemicals, Columbus, USA). Other epoxy resins based on bisphenols are commercially available under the trade designations EPILOX (Leuna Epilox GmbH, Leuna, Germany); flame retardant epoxy resins are available under the trade designation D.E.R 580 (a brominated bisphenol type epoxy resin available from Dow Chemical Co.). Cycloaliphatic epoxy resins are commercially available under the trade designation EPINOX (Hexion Specialty Chemicals GmbH).

It is preferred that the at least one epoxy resin is contained in part (B) in an amount in the range of from 15 to 75 wt.-%, preferably from 20 to 70 wt.-%, more preferably from 25 to 65 wt.-%, based on the total amount of part (B).

Part (B) of the low density curable precursor according to the present disclosure comprises a reactive diluent. Reactive diluents as used herein are generally epoxy-based reactive diluents, i.e. they are epoxy-containing molecules. Thus, the terms "epoxy-based reactive diluent" and "reactive diluent" may be used interchangeably. The epoxy-based reactive diluent for use herein is not particularly limited. Any epoxy-based reactive diluent commonly known in the art may be used in the context of the present disclosure.

Without wishing to be bound by theory, it is believed that the epoxy-based reactive diluent beneficially impacts, in particular, the flow characteristics of the curable compositions as described herein.

In a particular aspect of the present disclosure, wherein the epoxy-based reactive diluent for use herein has a saturated or unsaturated cyclic or aliphatic backbone, and preferably comprises glycidyl ether as reactive terminal end portions.

According to a preferred aspect, the epoxy-based reactive diluent for use herein is selected from the group consisting of diglycidyl ether of alcohols such as of alcohols having at least 10 carbon atoms. Preferred examples comprise resorcinol, diglycidyl ether of cyclohexane dimethanol, diglycidyl ether of neopentyl glycol, triglycidyl ether of trimethylolpropane, and any mixtures thereof.

Commercially available reactive diluents for use herein include for example "Reactive Diluent 107" (available from Hexion),the "Epodil" series (available from Air Products and Chemical Inc, Allentown, PA, USA) including in particular EPODIL 746, EPODIL 747, EPODIL 748 and EPODIL 757, and the "Araldite" series (available from Huntsman Inc.).

It is preferred that part (B) of the low density curable composition precursors as described herein comprises the at least one reactive diluent in an amount of from 1 to 25 wt.-%, preferably from 2 to 20 wt.-%, more preferably from 5 to 15 wt.-%, based on the total weight of part (B).

Part (B) of the low density curable composition precursors as described herein comprises at least one amide selected from fatty acid amides and polyamides. This is advantageous since it was found that in combination with the other components of part (B) as described herein, it has the effect that the density of the curable composition was efficiently reduced. Thus, the amount of low density fillers was reduced such that a favourable viscosity of part (B) and the curable composition obtained therefrom was achieved. The at least one amide is selected from fatty acid amides and polyamides, and any combinations and mixtures therefrom. It was found that polyamides, in particular amide waxes yielded particularly good results. Hence, it is preferred that the at least one amide is selected from polyamides, in particular, it is preferred that the at least one polyamide is at least one polyamide wax. Preferably, the at least one amide exhibits a melting point in the range of from 85 to 170 °C, preferably from 95 to 165 °C, more preferably from 105 to 150 °C. Polyamide waxes are commercially available, for example, from Kings Industries under the designation Disparlon, such as Disparlon 6500.

It is preferred that the at least one amide is contained in part (B) in an amount in the range of from 0.01 to 10 wt.-%, preferably from 0.05 to 8 wt.-%, more preferably from 0.1 to 5 wt.-%, based on the total weight of part (B).

Part (B) of the low density curable composition precursor according to the present disclosure further preferably comprises at least one viscosity modifier. This will allow a higher loading of filler materials into the composition, which is very advantageously with regard to low density filler materials, but also with regard to fire retardant compounds. The main advantage is the possibility of high loading with low density filler materials but at the same time keeping a good extrudability of part (B) and the curable composition obtained therefrom. Preferably, the at least one viscosity modifier is selected from organic dispersants. At least some of these compounds are also known under the designation of wetting agents. Preferred examples comprise compounds based on phosphoric acid polyesters. Commercially available examples are available from BYK Chemie under the designation BYK-9010.

Preferably, the at least one viscosity modifier is contained in part (B) in an amount in the range of from 0.01 to 10 wt.-%, preferably from 0.05 to 8 wt.-%, more preferably from 0.1 to 5 wt.-%, based on the total weight of part (B).

The curable compositions according to the present disclosure are low density compositions. That is, the exhibit lower densities than normally expected for epoxy resin-based coating or filler compositions, i.e. a cured density according to DIN 53479A of less than 0.55 g/cubic centimeter (g/cc). Therefore, part (A) and/or part (B) comprise a low density filler material having a density of less than 0.3 g/cc. This means that the curable compositions according to the present disclosure are excellently suitable for use in lightweight applications, in particular in the aerospace industry as coating, filler materials such as gap filler, edge filler or void filler in composite materials. Thus, the curable composition precursor is a curable coating composition precursor or a curable filler composition precursor, preferably a curable honeycomb composite core filler composition precursor. Preferably, the curable composition obtained by combining part (A) and part (B) has a cured density according to DIN 53479A of less than 0.53 g/cc, preferably less than 0.5 g/cc. A curable composition having a cured density below these values is of particular interest for lightweight applications in the aerospace industry. Also, lightweight materials are found to be of an increasing interest for the commercial transportation and automotive industries, hence, the compositions according to the present disclosure are also excellently suited and adaptable for these applications. Preferably, the at least one low density filler material is selected from organic or inorganic microspheres, more preferably from inorganic microspheres, more preferable from glass bubbles. Inorganic microspheres have the effect of yielding improved sandability and, in particular, a reduced density of the compositions. Microspheres have the capability of reducing the density of a composition, i.e. the density of a composition as described including the microspheres is lower than the density of a composition without the microspheres. Preferably, the inorganic microspheres are hollow inorganic microspheres due to an even further reduced density of the resulting compositions. The microspheres are preferably selected glass bubbles or ceramic bubbles. By way of example, microspheres may be selected from a variety of materials including glass, silica, ceramic (including sol-gel derived) or zirconia. The inorganic filler materials may have an average particle size typically of less than 500 µm, or between 10 and 100 µm. Preferred hollow inorganic microspheres include glass microspheres which are commercially available, for example, from 3M Company under the trade designation Glass bubbles H32, A20, D32 or MICROBUBBLES. It is preferred that the at least one low density filler material is selected from glass bubbles having a crush strength in the range of from 400 to 3500 Psi, preferably from 500 to 3000 Psi, more preferably from 600 to 2800 Psi. Using glass bubbles having a crush strength in these ranges will result in a low density composition which may be easily sanded after curing. This is of particular advantage when abradable or sandable coated surface are desired. A lower crush strength will result in crushed glass bubbles during extrusion of part (A) and/or part (B), while a higher crush strength will result in cured compositions which may be sanded as easy or even not at all. The term "crush strength" details the amount of pressure applied to the glass bubbles which about 90 % of the glass bubbles will survive undamaged.

Preferably, the at least one low density filler material is contained in part (A) in an amount in the range of from 5 to 50 wt.-%, preferably from 7.5 to 40 wt.-%, more preferably from 10 to 30 wt.-%, based on the total weight of part (A). Similarly, it is preferred that the at least one low density filler material is contained in part (B) in an amount in the range of from 5 to 50 wt.-%, preferably from 7.5 to 40 wt.-%, more preferably from 10 to 30 wt.-%, based on the total weight of part (B). Using lower amounts of inorganic microspheres would yield compositions not having the desired sandability and/or not fulfilling the need of lightweight compositions, using higher amounts would furnish compositions not having the desired mechanical properties or the desired resistance of the coatings towards water and weathering effects.

Part (A) and also part (B) of the curable composition precursor according to the present disclosure may further comprise at least one inorganic filler material. The inorganic filler material may have at least one advantageous effect such as reduced density of the composition, improved sandability, improved flow and/or workability of the compositions. Inorganic filler materials are preferred over organic filler materials since they do not compromise the compressive strength of the compositions. In general, any inorganic filler material known in the art may be used, i.e. silica fillers, glass, ceramics and the like.

Preferably, the at least one filler material comprises at least one silica compound. Silica compounds may have the effect of giving rise to improved flow, improved workability and increased of the compositions as described herein, without sacrificing mechanical strength or resistance to water and the like of the cured coatings obtained therefrom. In this regard, it is preferred that the at least one silica compound is selected from fused silica, fumed silica, perlite, and any combinations and mixtures thereof. Silica compounds as described herein may preferably be employed in the form of silica particles. Preferably, the silica particles comprise fumed silica, preferably hydrophobically fumed silica, fused silica, amorphous silica particles, hollow silica particles, silica gels, calcium silicates, and any combinations thereof. Exemplary commercial fillers include SHIELDEX AC5 (a synthetic amorphous silica, calcium hydroxide mixture available from W.R. Grace in Columbia, MD, USA); CAB-O-SIL TS 720 (a hydrophobic fumed silica-treated with polydimethyl-siloxane-polymer available from Cabot GmbH in Hanau, Germany); AEROSIL VP-R-2935 (a hydrophobically fumed silica available from Degussa in Düsseldorf, Germany); AEROSIL R-202 (a hydrophobically fumed silica available from Evonik Industries, Germany); glass-beads class IV (250-300 microns): amorphous silica (available from 3M Deutschland GmbH in Neuss, Germany); MINSIL SF 20 (available from Minco Inc., 510 Midway, Tennessee, USA); amorphous, fused silica; and APYRAL 24 ESF (epoxysilane-functionalized (2 wt.-%) aluminium trihydrate available from Nabaltec GmbH in Schwandorf, Germany). Fused silica is available, for example, under the trade designation MINSIL from Minco Inc., Midway, USA.

It is also preferred that the volume ratio of part (A) to part (B) is in the range of from 10:1 to 1:10, preferably from 5:1 to 1:5, more preferably from 2:1 to 1:2, even more preferably from 1.2:1 to 1:1.2.

For example, the ratio of part (B) to part (A) may be about 1:1 by volume. This may be achieved by containing part (A) and part (B) in an applicator well-known in the art comprising two separate cartouches (i.e. part (A) in one cartouche and part (B) in the other cartouche) and a mixing nozzle. It is also understood that the advantageous effects of the compositions according to the present disclosure are only achieved within these mixing ratios. For example, using a lower amount of part (A) may compromise both curing speed of the curable coating composition as well as the resistance of the coating obtained therefrom.

The present disclosure further provides a low density curable composition, obtained from combining parts (A) and (B) of the low density curable coating composition precursor as described herein. Combining as used herein has the meaning commonly used in the art for two-component compositions, i.e. combining both parts and mixing afterwards or mixing and combining in one step. This is often the case in mixing nozzles well-known in the art and commercially used and available for this purpose. The curable coating composition is preferably prepared directly before its intended use, i.e. the application onto a surface of a substrate, or into a cavity of an object such as a gap between panels, an edge gap, or a void in a honeycomb composite. Due to the properties of the compositions as described herein, the compositions are preferably extrudable and/or pumpable. After application and subsequent curing of the composition according to the present disclosure, a sandable coating may be obtained, which further protects the surface against influences such as water which would otherwise have a negative impact to the surface, e.g. the triggering of corrosion. The curable coating composition obtained from parts (A) and (B) of the curable coating composition precursor as described herein has a cured density of less than 0.55 g/cc. This has the effect that the coating derived therefrom is lightweight enough for aerospace applications from a weightsaving point of view, without sacrificing any mechanical strength or resistance to water or weathering stresses.. Hence, the low density curable composition as described herein is a curable coating composition, a curable honeycomb composite core filler composition, a curable gap filler composition, or a curable edge filler composition. Preferably, the composition exhibits after curing a cured density of less than 0.55 g/cm³, a shore D hardness according to ISO 868 of up to 65, preferably of up to 62, and more preferably of up to 60, a compressive strength according to ISO 604 at 23 °C at least 12 MPa, preferably of at least 14 MPa, and more preferably of at least 16 MPa. This is particularly advantageous for a sandable coating or filler composition for various applications in the aerospace industry. In this regard, it is preferred that the composition exhibits after curing a shore D hardness according to ISO 868 in the range of from 30 to 70, preferably from 35 to 65, and more preferably from 40 to 60.

The present disclosure further provides a method of smoothening surfaces comprising the following steps:
(a) Providing a low density curable composition precursor as described herein,
(b) Combining parts (A) and (B) of the low density curable composition precursor so as to form a curable coating composition;
(c) Applying the low density curable composition to at least part of the surface a substrate;
(d) Allowing the low density curable composition to cure so as to obtain a cured coating;
(e) Sanding the surface comprising the cured coating, thereby obtaining a smoothed surface.

As described above, parts (A) and (B) are combined so as to form a curable composition, preferably by means of a mixing nozzle from which the curable composition is directly applied onto at least part of the surface of at least one substrate. Application of the curable composition may be carried out by means commonly known and used in the art, e.g. direct manual application from the mixing nozzle (and optional further manual spreading by a spatula and the like). Due to the properties of the excellent extrudability and the curing characteristics of the curable coating compositions according to the present disclosure, the coating compositions are well suited for automatic application such as application via coating knife or doctor blade and the like. Thus, the coating compositions as described herein are well suited for maintenance and manufacture operations in aerospace and automotive industries. Accordingly, it is preferred that application of the low density curable composition in step (c) is carried out by automatic means, preferably selected from doctor blade, extrusion, dispensing, coating knife or mixing nozzle. Coating onto the substrate as described herein comprises coating onto a substrate until a desired thickness, but also comprises filling up cracks, holes and other kind of damages in the surface of the substrate. Accordingly, a more or less even surface coating may be obtained. Accordingly, it is preferred that the surface of the substrate comprises defects and/or gaps, which are filled and/or covered by the coating composition of the present disclosure. This is particular useful when repairing damaged parts or filling gaps in or between parts.

Due to the properties of the compositions as described herein, the substrate comprises materials selected from aluminium and its alloys, steel, carbon, ceramics, and fiber-enforced composite materials, preferably carbon fiber-enforced composite materials. Generally, these materials may be coated with the compositions according to the present disclosure. With respect to the advantageous properties of the coating compositions and their excellent suitability for applications in aerospace, carbon fiber-enforced composite materials are preferred. Furthermore, it is preferred that the surface of the substrate comprises defects such as cracks and/or gaps, which are filled and/or covered by the compositions according to the present disclosure. The substrate is preferably a part an aircraft, car, truck, train or boat, preferably a part of an aircraft. More specifically, it is preferred that the part of an aircraft comprises at least one part of a rotation engine, part of a body part, part of a wing, part of a flap, and/or part of a panel or assembly of panels. During manufacture or maintenance, the curable coating composition according to the present disclosure may be advantageously applied to at least part of the surface of these parts, preferably by automatic means (i.e. respective machinery or devices). Preferably, the rotation engine is a turbine as present in most cases in modern aircraft, i.e. the turbine is preferably an aircraft engine. In this regard, turbines, in particular when used as aircraft engines, are in most cases provided with large air intakes. This in in particular true with turbofan engines as used in most aircraft travelling at subsonic speeds. Turbofan engines are used since they are optimized for providing propulsion at these speeds and below, i.e. they offer a combination of thrust, fuel economy and (important especially for landing and starting moves in densely populated areas) relatively silent operation. Hence, it is preferred that the aircraft engine is a turbofan engine. Air-exposed parts of these turbofan engines have desirably a smooth surface. This will have the effect of an improved airflow, i.e. improved aerodynamics, which may lead to better output of the turbofan engine and/or better fuel economy. In particular, it is desirable that the gap between the fan casing and the tips of the turbofan blades is as small and as smooth as possible. This may be achieved by the curable compositions and the method according to the present disclosure. In this case, the coating composition as described herein is applied to the air-exposed part of the fan case, i.e. to the inside part of the fan casing. Applying the coating composition is preferably carried out by automatic means. It is also preferred that the fan case of the turbofan engine comprises a fiber-enforced composite material, preferably a carbon fiber-enforced composite material.

Next, in step (d), the curable coating composition is allowed to cure. That is, the curable composition is preferably allowed to cure at ambient temperatures, without the need of externally heating the coating up, such as putting the coated substrate into a hot air oven. Preferably, curing in step (d) takes place at temperatures in the range of from 5 to 40 °C, preferably from 10 to 35 °C, more preferably from 15 to 30 °C. The ability to cure at ambient temperatures without the need of extra heating is a particular advantage of the coating compositions as described herein, in particular in conjunction with the industrial manufacture of larger parts in aerospace or automotive industries. That is, it is possible to use the composition according to the present disclosure or to carry out the method as described herein for large or very large parts, and/or without the need to disassemble a combination of parts. For example, there is no need to remove a part from an aircraft for carrying out the method. This represents a further advantage of the coating compositions and the method as described herein.

After allowing the curable composition to cure, a sandable surface is obtained. This surface is then sanded so as to obtain a smoothed surface which then may be further treated, e.g. by painting. Sanding may be carried out by manual or automated means, preferably by automated means as known in the art. Also, a combination of manual and automated means may be used, e.g. sanding the already pre-sanded surface manually in order to achieve a well-smoothed surface. In a preferred embodiment, i.e. when the substrate is the inside of the fan case of a turbofan engine, it is preferred that sanding and/or smoothing is carried out by the tips of the fan blades itself. That is, the coating composition is applied to the inside of the fan case of the turbofan engine and allowed to cure. After curing, turning the turbofan engine will cause the tips of the fan blades to sand the coating, thereby creating both a smoothed surface of the inner fan case and, in particular, creating a very small gap between the fan case and the tips of the fan blades. Creating the smallest possible gap between the fan case and the tips of the fan blades is very desirable with regard to the airflow and the efficiency of the turbofan aircraft engine. This may be achieved by the composition and the method according to the present disclosure. Accordingly, it is preferred that the method as described herein is a method for smoothening surfaces of parts of vehicles of in aerospace, automotive and transportation industries, preferably a method for smoothening surfaces of aircrafts.

The present disclosure further provides a of the low density curable composition precursors and low density curable compositions as described herein for manufacture and maintenance operations in aerospace, automotive and transportation industries, preferably in aerospace industries. Preferably, the use comprises manufacture and maintenance operations of aircraft or spacecrafts. Preferably, the use comprises maintenance and manufacture operations of rotation engines in aerospace industries. Further preferred is a use of the low density curable composition precursor and low density curable compositions as described herein for smoothening of air-exposed surfaces of rotation engines, preferably turbofan engines. Preferably, the surface is the inside of the turbofan casing. Also preferred is the use as described herein for narrowing the gap between the tips of the turbofan blades and the inner surface of the fan casing of turbofan engines, in particular in aerospace industries. That is, a preferred use is the use as abradable turbofan case filler in aerospace industries. It is also preferred that the low-density curable composition is used as a filler material or a reinforcing material in honeycomb composite structures, preferably as a reinforcement filler material. In this regard, it is preferred that the low-density curable composition is used as an edge filler material or a core filler in a honeycomb structure material, preferably honeycomb sandwich panels.

### Examples

The present disclosure is further described without however wanting to limit the disclosure thereto. The following examples are provided to illustrate certain embodiments but are not meant to be limited in any way. Prior to that some test methods used to characterize materials and their properties will be described. All parts and percentages are by weight unless otherwise indicated.

### EXAMPLES

### Materials used:

**Table 1: Base materials used in the experimental section.**

| **Material** | **Function** | **Supplier** |
|---|---|---|
| Epikote 828 | Epoxy Base Resin | Hexion |
| Epikote 232 | Epoxy Base Resin | Hexion |
| Araldite DC-Y | Reactive diluent | Huntsman |
| BYK-9010 | Viscosity modifier | BYK Chemie |
| Disparlon 6500 (Polyamide wax) | Thixotropic agent & Density reduction | Kings Industries |
| RZ 810 | Main curing agent (Polymeric diamine) | 3M |
| Ancamine K54 | Cure accelerator | Air Products |
| Glass bubbles A20 | Density control, true density 0.2 g/cubic centimeter | 3M |
| Glass bubbles A32 | Density control, true density 0.32 g/cubic centimeter | 3M |
| Saytex BT 93 | Flame retardant | Albermarle |
| Exolit AP462 | Flame retardant | Clariant |
| Aerosil R202 (Fumed Silica) | Thixotroic agent | Degussa |

### Test Methods

### Cured Density

Density of the cured epoxy-based compositions was measured according to DIN 53479A. Samples of the epoxy-based composition were prepared by casting the corresponding precursors into moulds and cured at ambient temperature for at least 48 h. The cured samples of the epoxy-based composition were removed from the moulds and their exact dimensions recorded. Each sample was weighted and the density calculated and recorded in grams per cm³.

### Extrusion Rate

A 400 ml Cartridge (Mixpac, Switzerland) was filled manually to 400 ml with parts B and parts A in a ratio of 1:1 by volume. A mixing nozzle of type MC 13-18 (static 2K mixer from Sulzer, Switzerland) was fitted to the cartridge. The mixing nozzle had a circular outlet nozzle having a diameter of 4 mm. The product was extruded from the cartridge by using a pneumatic dispensing gun. The extrusion rate was determined by measuring the quantity extruded applying a pressure of 4 bar for 60 seconds. Measurements were made at room temperature. Each composition was tested 3 times and the results were expressed in g/min and represent the average from the three measurements.

### Compressive Strength

200 g of the curable composition were cast into a release-coated mould having the dimensions of 12.5 mm (height) x 12.5 mm (width) x 25 mm (length) and being open on one major side. The curable composition was then allowed to cure for 48 h at room temperature.

All test specimens were compressed along their 25 mm axis at a rate of 0.5 mm/min by using a Zwick Model Z050 Tensile Tester (Zwick GmbH & CO., Ulm, Germany), equipped with heating capability.

Compressive strength was measured at 23 °C (room temperature). The test specimens were preconditioned in room temperature for at least 30 minutes before testing.

Six samples were measured for each epoxy composition. The results were averaged and recorded in MPa.

### Vertical burn test

The vertical burn test was performed according to Airbus Directive ABD 0031, Issue September 2002. Three test specimens with a dimension of 6 mm x 75 mm x 300 mm were cut off a 6 mm x 400 mm x 400 mm panel of epoxy composition. The epoxy composition was extruded from a dual pack cartridges into aluminum mold and allowed to cure for at least 48 h at 23 (+ 2) °C. The specimens were then tested in a flammability chamber to the 60-second vertical Bunsen burner test. After an exposure to the flame, self-extinguishing times were measured and the results averaged for each of the three epoxy-based resin test specimens.

### Shore D Hardness:

Cured sheets of the composition having thickness of 3 mm were fabricated. The Shore D hardness of each composition was determined according to ISO 868. 3 Individual measurements were recorded and the result averaged.

### Weight gain soaking test:

The composition was extruded and samples were cut out having the dimensions of 12.5 mm long, 12.5 mm broad and 25 mm thick. These samples were allowed to cure for 48 h at room temperature. After determining their weight, the cured samples were then immersed in the respective liquids, i.e. boiling water, Jet Fuel A1, Methyl-Ethyl-Keton (MEK) and Skydrol, respectively. Then, the samples were taken out of the liquids, wiped clean with a dry cloth, and weight of the samples was determined again. By setting the weight of a sample after immersion in a liquid in relation to the weight of the sample before the immersion, the weight gain was calculated in %.

### Preparation of part (A) and part (B)

The ingredients as set forth in tables 2 and 3 were used to prepare part (A) and part (B) according to the procedures set forth below. For all examples and comparative examples, part (A) as set forth in table (2) was used. Different part (B) referring to Example 1 and Comparative Examples 1, 2 and 3 as set forth in table (3) were then combined with this part (A) in a 1:1 ratio.

### Part A:

In 150 ml Speed mixer cup the main curing agent RZ810 was mixed with the cure accelerator Ancamine K54 for 1 min at 3500 rpm. Then the flame retardant was incorporated by mixing it for 2 min at 3500 rpm. In last step the glass bubbles were added and mixed for at least 2 min at 3500 rpm.

The whole mixture was left to cool down before being degassed under mixing and filled into a compartment of a 200 ml cartridge. Uncured density of part (A) was found to be 0.48 g/cc.

**Table 2: Composition of part (A).**

| Ingredient | Weight (g) |
|---|---|
| RZ 810 | 57.5 |
| Ancamine K54 | 7 |
| Flame retardant | 10.5 |
| Glass bubbles A20 | 24 |
| Fumed Silica | 1 |

### Part B:

Different part (B) were prepared in DAC Mixer by following below procedure:
In formulations that contain polyamide wax (Disparlon 6500) preparation started by mixing polyamide wax with epoxy resin for 60 s at 3500 rpm. The mixture was then transferred to an air-driven Oven and heated up to 90 - 100 °C and kept there for at least 1 hour. During this time the polyamide wax would swell and form together with the epoxy resin gel-like mixture. In Formulation without polyamide wax above step was skipped. Epoxy resin (with or without polyamide), Reactive diluent & viscosity modifier were added together and mixed for 1 min at 3500 rpm. Addition of flame retardant and colorant was carried out and again mixing was continued for 1 min at 3500 rpm. Glass bubbles and fumed silica were added and mixing was continued for 2 min at 3500 rpm. Result of above steps was a homogeneous thixotropic paste. The composition was left to cool down to ambient temperature (23 °C - 25 °C) before filling it into the other compartment of a 200 ml duo cartridge. Part (A) and part (B) were used in a 1:1 ratio.

**Table 3: Composition of part (B) of the Example and Comparative Examples.**

| **Ingredient** | **Ex. 1** | **Comp. Ex. 1** | **Comp. Ex. 2** | **Comp. Ex. 3** |
|---|---|---|---|---|
| Epoxy resin | 56 | 56 | 56 | 56 |
| Polyamide wax | 0.5 | 0 | 0 | 0.5 |
| Reactive diluent | 9 | 9 | 9 | 9 |
| Viscosity modifier | 1 | 1 | 1 | 1 |
| Flame retardant | 10.5 | 10.5 | 10.5 | 10.5 |
| Glass bubbles A20 | 21.5 | 22 | 25 | 0 |
| Glass bubbles D32 | 0 | 0 | 0 | 21.5 |
| Fumed Silica | 0.5 | 0.5 | 0.5 | 0.5 |
| Colorant | 1 | 1 | 1 | 1 |

Uncured density of different part (B) compositions are set forth in table 4.

**Table 4: Uncured densities of ex. 1 and comparative examples.**

| **Composition** | **Ex. 1** | **Comp. Ex. 1** | **Comp. Ex. 2** | **Comp. Ex. 3** |
|---|---|---|---|---|
| **Density g/cc** | 0.49 g/cc | 0.56 | 0.50 | 0.58 |

Only ex. 1 and comp. ex. 1 were found to exhibit an acceptable extrudability.

The compositions obtained by mixing (and extruding, if possible) part (A) and the respective part (B) according to ex. 1 and the comparative examples were then tested for various properties. The results of these tests are summarized in table 5.

**Table 5: Test results of cured samples of compositions of ex. 1 and comp. ex. 1, 2, and 3.**

| | **Ex. 1** | **Comp. Ex. 1** | **Comp. Ex. 2** | **Comp. Ex. 3** |
|---|---|---|---|---|
| Cured density [g/cc] | 0.48 | 0.54 | 0.50 | 0.56 |
| Extrudability | Yes | Yes | No | No |
| Shore D Hardness | 52 | 50 | 54 | 63 |
| Compression at 23 °C [MPa] | 21 | 24 | 22 | 27 |
| Flammability test (60 s vertical) | Pass | Pass | Pass | Pass |

Further tests were performed on ex. 1. Regarding its ageing and fluid resistant properties against fluids used in aerospace technology such as water, Skydrol, jet fuel and common organic solvents. It was found that ex. 1 showed the same resistance against these liquids as common comparable aerospace products.

## Claims

1. A low-density curable composition precursor, comprising
(a) a first part (A) comprising:
(i) at least one polymeric diamine;
(b)a second part (B) comprising:
(i) at least one epoxy resin;
(ii) at least one reactive diluent;
(iii) at least one amide selected from fatty acid amides and polyamides;
wherein part (A) and/or part (B) comprise a low density filler material having a density of less than 0.3 g/cc; and wherein the curable composition obtained by combining part (A) and part (B) has a cured density according to DIN 53479A of less than 0.55 g/cc.

2. The low-density curable composition precursor according to claim 1, wherein part (A) and part (B) are extrudable.

3. The low-density curable composition precursor according to claim 1 or claim 2, wherein the curable composition precursor comprises at least one fire retardant compound in part (A) and/or part (B).

4. The low-density curable composition precursor according to any one of the preceding claims, wherein part (A) comprises at least one cure accelerator, preferably selected from Lewis-base accelerator, more preferably selected from tertiary amines and metal nitrates, even more preferably selected from aromatic tertiary amines.

5. The low-density curable composition precursor according to claim 4, wherein the at least one cure accelerator is contained in part (A) in an amount in the range of from 0.1 to 20 wt.-%, preferably from 1 to 15 wt.-%, and more preferably from 2.5 to 12.5 wt.-%, based on the total weight of part (A).

6. The low-density curable composition precursor according to any one of the preceding claims, wherein in part (B) the at least one amide is selected from polyamides, preferably wherein the at least one polyamide is at least one amide wax.

7. The low-density curable composition precursor according to any one of the preceding claims, wherein in part (B), the at least one amide exhibits a melting point in the range of from 85 to 170 °C, preferably from 95 to 165 °C, more preferably from 105 to 150 °C.

8. The low-density curable composition precursor according to any one of the preceding claims, wherein part (B) further comprises at least one viscosity modifier, preferably wherein the at least one viscosity modifier is selected from organic dispersants.

9. The low-density curable composition precursor according to any one of the preceding claims, wherein the curable composition obtained by combining part (A) and part (B) has a cured density according to DIN 53479A of less than 0.53 g/cc, preferably less than 0.5 g/cc.

10. The low-density curable composition precursor according to any one of the preceding claims, wherein the at least one low density filler material is selected from organic or inorganic microspheres, more preferably from inorganic microspheres, more preferable from glass bubbles.

11. The low-density curable composition precursor according to claim 10, wherein the at least one low density filler material is selected from glass bubbles having a crush strength in the range of from 400 to 3500 Psi, preferably from 500 to 3000 Psi, more preferably from 600 to 2800 Psi.

12. A low-density curable composition, obtained by combing part (A) and part (B) of the curable composition precursor according to any one of the preceding claims.

13. A method of smoothening surfaces comprising the following steps:
(a) Providing a low-density curable composition precursor according to any one of claims 1 to 11,
(b) Combining parts (A) and (B) of the curable coating composition precursor so as to form a curable composition;
(c) Applying the curable composition to at least part of the surface a substrate;
(d) Allowing the curable composition to cure so as to obtain a cured coating;
(e) Sanding the surface comprising the cured coating, thereby obtaining a smoothed surface.

14. The method according to claim 13, wherein curing in step (d) takes place at ambient temperature.

15. Use of the curable coating composition precursor according to any one of claims 1 to 11 or of the low-density curable composition according to claim 12 for manufacture and maintenance operations in the aerospace industry, preferably wherein the use comprises manufacture and maintenance operations of aircraft.
